# Europäisches Patentamt

# European Patent Office

# Office européen des brevets

(19)

(11) Numéro de publication: **0 214 211**
**B1**

(12)

# FASCICULE DE BREVET EUROPEEN

(45) Date de publication du fascicule du brevet:
**18.10.89**

(51) Int. Cl.⁴: **A 61 C 5/00**, C 09 J 5/00

(21) Numéro de dépôt: **86901420.9**

(22) Date de dépôt: **27.02.86**

(86) Numéro de dépôt international:
**PCT/FR 86/00065**

(87) Numéro de publication internationale:
**WO 86/05085 (12.09.86** Gazette 86/20)

(54) **FIXATION DE PIECES RIGIDES TELLE QU'UNE PROTHESE DENTAIRE.**

(30) Priorité: **28.02.85 FR 8502920**

(43) Date de publication de la demande:
**18.03.87 Bulletin 87/12**

(45) Mention de la délivrance du brevet:
**18.10.89 Bulletin 89/42**

(84) Etats contractants désignés:
**BE CH DE GB IT LI NL SE**

(56) Documents cités:
**EP-A- 0 012 652**

**L'inlay collé en résine composite, B. TOUATI et al,
Cahiers de Prothèse no. 48, Déc. 1984, page 39**

(73) Titulaire: **TOUATI, Bernard, 11, place du Général
Catroux, F-75017 Paris (FR)**
Titulaire: **WERLY, Marc, 16, rue d'Odessa, F-75014 Paris
(FR)**

(72) Inventeur: **TOUATI, Bernard, 11, place du Général
Catroux, F-75017 Paris (FR)**
Inventeur: **WERLY, Marc, 16, rue d'Odessa,
F-75014 Paris (FR)**

(74) Mandataire: **Wagret, Jean-Michel et al, Propi
Conseils 23 rue de Léningrad, F-75008 Paris (FR)**

## Description

La présente invention concerne la mise en place et la fixation de pièces rapportées sur un support.

Plus spécialement l'invention concerne la mise en place et la fixation de prothèses constituées d'un élément rigide rapporté et solidarisé sur un support lui-même rigide tel qu'une dent ou un membre osseux.

L'invention concerne plus particulièrement la solidarisation de prothèses dentaires telles qu'un inlay destiné à occlure une cavité ou à compléter une partie manquante de la dent par suite du développement d'une carie dentaire ou d'une brisure accidentelle.

L'invention peut être appliquée d'une façon générale à toutes opérations visant à assurer la solidarisation d'une pièce ou bloc rigide destiné à être rapporté sur un support rigide; cependant l'invention sera décrite ci-après plus spécialement dans son application préférentielle qui concerne la mise en place de prothèses, notamment dans le domaine de la chirurgie dentaire.

La remise en état de l'appareil dentaire, notamment au niveau d'une dent dégradée par une carie ou dont l'intégrité a été modifiée ou attaquée accidentellement, vise à reconstituer le profil et la forme de la dent, de façon à permettre à cette dernière de jouer son rôle dans l'ensemble buccal et dentaire, en assurant les meilleures conditions de stabilité physique et biologique à la structure ainsi reconstituée.

De façon conventionnelle, le praticien traite les attaques légères et superficielles par un nettoyage mécanique de la solution de continuité constituée dans la structure de la dent en créant une cavité dont les parois assainies peuvent recevoir un matériau de remplissage généralement mis en place par moulage.

Dans ce cas, la solidarisation du matériau (amalgame ou ciment) est obtenue par sertissage du matériau dans la cavité dont les bords sont resserrés ou encore par micro-clavetage du matériau d'obturation dans les microrétentions créés à la surface des parois de la cavité à occlure.

Ces conditions définissent les limites du domaine d'application de ces techniques traditionnelles; notamment lorsque l'importance de la partie manquante à remplacer ne permet pas de constituer une cavité aux bords resserrés permettant un effet de sertissage.

Dans ce dernier cas, il est alors nécessaire de réaliser une prothèse représentant la partie manquante de la dent qui doit venir se positionner et se solidariser exactement sur la partie saine pour assurer à l'ensemble la forme et le galbe de la dent reconstituée.

Cette prothèse ou inlay (préfabriquée en atelier de façon conventionnelle et à partir d'une empreinte en creux de la machoire objet du traitement) doit donc être solidarisée sur la partie de la dent subsistant et qui a été préalablement assainie de façon à reconstituer la dent dans sa forme opérationnelle.

La solidarisation de la prothèse dentaire notamment constituée par un inlay, est obtenue par collage au moyen d'un agent de liaison ou adhésif appropriés et parmi lesquels sont utilisées diverses résines.

La polymérisation de la résine sur place constitue l'interface assurant la solidarisation entre la paroi de la cavité et la paroi venant en concordance et de profil complémentaire de la prothèse.

L'initiation de la réaction de polymérisation qui va permettre le durcissement de l'agent de liaison et la solidarisation de la prothèse dans son emplacement récepteur est généralement obtenue par voie chimique.

Cela signifie que la résine qui constitue l'adhésif est donc mélangée immédiatement avant son utilisation avec un deuxième composant comportant un catalyseur de la polymérisation et constituant le durcisseur.

L'utilisation de cette méthode ce collage chimique suppose la mise en oeuvre de phases opératoires préalables visant à donner à la paroi de la cavité réceptrice un état de surface appropriée permettant un étalement maximum et partant une adhérence efficace de l'agent de liaison sur cette paroi, afin d'obtenir à la fois une bonne liaison cohésive (entre l'adhésif et le matériau support) comme une bonne liaison adhésive (au sein du matériau adhésif lui-même).

Les résines adhésives à polymérisation par voie chimique utilisées actuellement donnent des cohésions qui sont dans l'ensemble satisfaisantes mais dont la mise en oeuvre suscite des problèmes délicats.

Ces problèmes tiennent au fait que il est par définition nécessaire de démarrer la réaction de polymérisation avant la mise en place de l'adhésif et de la prothèse.

Et la réaction de polymérisation doit nécessairement être enfermée dans un laps de temps relativement court afin de rendre cette opération supportable par le patient.

Il suit que le praticien ne dispose que d'un temps très limité pour assurer l'ajustement correct de la prothèse; et pour peu que des corrections ou un ajustement plus précis apparaissent nécessaires, le praticien se trouve dans l'impossibilité de l'effectuer confortablement car l'ensemble se trouve rapidement immobilisé.

Un autre inconvénient provient de ce que l'excès d'adhésif qui déborde à la jointure entre la prothèse et les bords de la partie saine de la dent, se trouve également solidifié sur place et l'opération de correction de la paroi de la dent à ce niveau, de façon à retrouver une paroi continue en «ébavurant» les parties débordantes d'adhésifs, sont difficiles et délicates à mener.

En effet, si le praticien procède à l'enlèvement de l'excès d'adhésif débordant avant la polymérisation et avant solidification, il risque d'affecter le positionnement correct de la prothèse et de la déplacer de façon malencontreuse.

Et si le praticien pour éviter cet inconvénient attend la solidarisation ferme et définitive de la prothèse, il se trouve alors en présence d'un excès d'adhésif qui par définition est très solide et qui va donc exiger un travail important de l'outil afin d'aboutir à un surfaçage et à une continuité parfaite de la paroi tout au long de la jointure entre la prothèse et le support dentaire.

Il est donc apparu souhaitable de disposer d'un adhésif susceptible d'être mis en place à l'état liquide à la fois sur la paroi de la structure dentaire réceptrice et sur la paroi de la prothèse venant en regard, la résine restant dans son état liquide sans polymérisation pendant le temps nécessaire à l'ajustement et aux vérifications utiles permettant un bon positionnement final de la prothèse, puis d'initier la réaction de polymérisation sur commande extérieure et lorsque le praticien estime que le positionnement correct est obtenu et que l'ensemble peut alors être figé dans la position qu'il a assurée; un peu comme le photographe effectue le réglage de son appareil sur sa plaque dépolie avant de déclencher la prise de vue sur la plaque sensible lorsqu'il a pu s'assurer que les conditions de l'image réussie sont réunies.

On connaît sans doute des résines dont la réaction de polymérisation peut être déclenchée de l'extérieur par une radiation électro-magnétique notamment dans les longueurs d'ondes correspondant à la lumière visible, de sorte que ces résines peuvent être mises en place et déposées in-situ à l'état liquide, éventuellement travaillées à l'état liquide, sans que la réaction de polymérisation se déclenche, ces résines polymérisant à la réception d'une radiation dans une longueur d'onde appropriée; de sorte qu'il est possible de déclencher au moment voulu la réaction de polymérisation en dirigeant sur la couche de résine en place la radiation dans la longueur d'onde voulue.

Ces résines photopolymérisables sont d'ailleurs utilisées dans la pratique dentaire et dans la chirurgie odontologique; elles servent notamment à la reconstitution de la paroi dentaire en obturant des cavités ou des irrégularités de relief de dimensions réduites, et pour lesquelles il est possible d'obturer en une seule fois par une couche de résine la cavité réceptrice. (Voir «l'Inlay collé en résine composite» de B. TOUATI & Al. paru dans les Cahiers de Prothèse N° 48 de Décembre 1984, page 39).

Lorsque la cavité dépasse une certaine dimension, il devient alors nécessaire d'opérer en plusieurs couches déposées successivement ce qui aboutit déjà à complexifier l'opération et pose le problème de la cohésion des couches successives entre elles de sorte que le traitement d'obturation et de reconstitution de la paroi dentaire par résine photopolymérisable se situe dans une gamme d'application relativement étroite.

Notamment l'utilisation de résines photopolymérisables n'a pas pu être opérée dans le cadre de la mise en place et de la solidarisation de prothèses constituées de blocs rigides ou inlays rapportés sur une structure dentaire support.

On comprend en effet que la réaction d'initiation de polymérisation, déclenchée par l'irradiation lumineuse suppose que la couche de résine soit accessible auxdites radiations depuis l'extérieur.

Or précisément dans le cas de la mise en place d'une prothèse notamment d'un inlay, l'adhésif constitue une interface entre la paroi support de la dent et la paroi de la prothèse venant en regard, interface d'une épaisseur nécessairement très limitée et cette interface n'est donc pas accessible aux radiations lumineuses susceptibles de catalyser la réaction de polymérisation.

Or, il est évident que 'est surtout dans le cas de la mise en place d'une prothèse que l'on recherche la possibilité d'un adhésif permettant après application les travaux d'ajustement et de vérification avant de déclencher la polymérisation qui va figer définitivement la prothèse en place.

L'invention remédie à ces inconvénients et permet précisément la fixation d'une pièce telle qu'une prothèse sur un support notamment dentaire au moyen d'une résine photopolymérisable.

A cet effet l'invention concerne en premier lieu une pièce ou composant du type constitué d'un bloc rigide destiné à être rapporté et solidarisé, par scellement ou collage sur un support lui-même rigide telle qu'une prothèse ou un inlay et destiné à occlure une cavité dudit support rigide, caractérisé en ce que le bloc comporte au moins deux régions dort une région opaque définissant une façade apparaissant à l'extérieur et une région translucide orientée à l'intérieur vers la paroi de ladite cavité et apte à constituer une zone de diffusion de radiations notamment lumineuses pour initier une réaction de polymérisation d'une résine photopolymérisable constituant l'interface de scellement ou collage entre la paroi réceptrice de ladite cavité et la paroi en regard du bloc rapporté, et en ce que ladite région opaque est traversée par un passage débouchant d'un côté vers le milieu extérieur par la façade de cette région opaque et débouchant de l'autre côté dans ladite région translucide, ce passage permettant le guidage des rayonnements notamment lumineux, depuis l'extérieur jusque dans ladite région translucide pour initier la réaction de photo-polymérisation de ladite résine constituant l'interface de scellement ou de collage.

Par exemple, ledit passage constituant canal de guidage pour les ondes lumineuses catalysant la réaction de polymérisation est constitué de la même matière que la partie translucide de la prothèse.

Selon une forme de réalisation plus particulière, ledit passage est occupé par une fibre optique aboutissant par une extrémité à ladite région translucide de la prothèse.

Et plus particulièrement la fibre optique est prévue débordant à l'extérieur de ladite région opaque pour permettre l'exposition de son extrémité libre à l'émission d'une source de rayonnement lumineuse telle qu'un rayon laser.

On comprend que la pièce, notamment la prothèse ainsi réalisée permet au praticien d'assurer la mise en place de la résine de collage du type photopolymérisable qui reste dans son état liquide sans aucun phénomène de durcissement tout le temps nécessaire, pendant lequel le praticien peut opérer les corrections réglages, ajustements et vérifications utiles; et la réaction de polymérisation peut alors être déclenchée de l'extérieur par irradiation lumineuse, les radiations traversant la partie opaque de la prothèse pour se répandre et diffuser en arrière de cette dernière, dans l'interface occupé précisément par la résine photopolymérisable, la lumière étant répandue par la partie translucide arrière de la prothèse.

Selon un développement de l'invention, la prothèse est caractérisée en ce que dans la région translucide est prévue un moyen de diffraction des radiations lumineuses, tel qu'un prisme, ce dernier étant situé au débouché dudit passage notamment au débouché de la fibre optique dans la région translucide, ce moyen de diffraction assurant la répartition des radiations sur l'ensemble de l'interface entre la prothèse et la paroi de la cavité réceptrice.

Selon une forme de réalisation plus particulière, les deux régions respectivement opaques et translucides de la prothèse sont réalisées en une résine de même nature, la région opaque étant constituée d'une résine identique à la résine de la région translucide et comportant des charges en densité et granulométrie appropriée et apte à donner à cette partie opaque une coloration convenable.

On comprend que l'utilisation d'une même résine pour constituer le bloc formant la prothèse permet d'assurer des conditions parfaites d'homogénéité dudit bloc, la partie opaque, devant constituer la façade de la prothèse se différenciant de la partie arrière translucide par la présence de charges notamment des charges pigmentaires de nature minérale, en densité appropriée et plus importante à proximité de la paroi extérieure constituant la façade visible de la prothèse.

Selon une autre caractéristique correspondant à une forme de réalisation de l'invention, le bloc de résine est constitué d'une résine unique définissant les deux régions respectivement opaques et translucides, et lui-même formé d'une résine unique du type photopolymérisable et dont la réaction de polymérisation a été initiée par irradiation d'un rayonnement lumineux d'une longueur d'onde déterminée.

A cet effet l'invention concerne encore un procédé de réalisation d'une prothèse caractérisée en ce que l'on coule dans une emprunte en creux de forme appropriée une première couche de résine translucide et constituant une région intérieure translucide sur laquelle est coulée une seconde couche de résine chargée de particules pigmentaires pour constituer une région opaque de ladite prothèse, et en ce que préalablement à la coulée de la seconde couche de résine chargée, on positionne l'extrémité d'une fibre optique amenée au contact de la couche de résine translucide et la résine chargée destinée à constituer la région opaque de la prothèse est coulée autour de ladite fibre ainsi noyée dans la région opaque de la prothèse qu'elle traverse, l'extrémité libre de la fibre débordant à l'extérieur pour permettre son exposition aux radiations lumineuses.

L'invention concerne encore la mise en oeuvre d'une pièce telle que précédemment définie et cette mise en oeuvre est caractérisée en ce que la pièce comportant une région opaque et une région translucide est insérée dans une cavité réceptrice, après interposition sur la paroi de la cavité et/ou sur la partie de la paroi de la pièce située en regard, d'une interface de collage ou scellement constitué d'une résine photopolymérisable à l'état liquide, et après ajustement et vérification du positionnement de la pièce, la résine photopolymérisable constituant l'adhésif d'interface entre la paroi de la cavité réceptrice et de la pièce est exposée à l'irradiation d'un rayonnement de longueur d'onde spécifique de ladite résine et apte à initier la réaction de polymérisation, ledit rayonnement étant guidé à travers la région opaque de la pièce depuis une source extérieure au moyen de la fibre optique noyée dans ladite pièce, et en ce que la partie de la fibre optique débordant à l'extérieur est ensuite sectionnée à fleur de la façade apparente de la pièce.

Selon une autre particularité de l'invention, la fibre optique est reliée à une source de rayonnements laser du type laser à argon apte à transmettre par la fibre optique associée à la prothèse et dont l'extrémité libre est disposée préalablement face à la source de l'émission, une irradiation lumineuse catalysant la réaction de polymérisation de la résine de scellement.

D'autres caractéristiques et avantages de l'invention ressortiront de la description qui suit et qui est donnée en rapport avec une forme de réalisation particulière et présentée à titre d'exemples non limitatifs en se référant aux dessins annexés.

La figure 1 représente une vue en coupe d'une dent comportant une prothèse conforme à l'invention en cours de solidarisation.

La figure 2 représente une vue en coupe agrandie de la prothèse de la figure 1.

L'exemple ici décrit est représenté aux dessins, concerne la mise en place d'un inlay venant remplacer la partie manquante d'une dent.

La dent support 1 présente donc une cavité 2 dans laquelle viendra prendre place la prothèse ou inlay 3 prévue avec une paroi extérieure 4 dont le contour est prévu pour prolonger et reconstituer la paroi extérieure de la partie manquante de la dent tandis qu'une paroi intérieure 5 vient se positionner en regard de la paroi intérieure 6 de la cavité 2 dans laquelle elle vient s'encastrer, étant prévue avec une forme exactement complémentaire.

L'invention permet d'assurer dans des conditions nettement améliorées la solidarisation de la prothèse 3 dans son logement récepteur 2.

Selon l'invention, la prothèse constituée d'un bloc de résine comporte deux parties soit une partie dite extérieure 7 dont la paroi 4 correspond à la façade de la prothèse orientée vers l'extérieur et prolongeant la paroi extérieure de la dent.

Et la prothèse comporte une partie intérieure 8 dont la paroi 5 vient faire face avec un profil complémentaire à la paroi 6 du logement récepteur 2.

Et selon l'invention tandis que la partie dite extérieure 7 est prévue opaque et plus spécialement blanche, la partie intérieure 8 est prévue translucide.

A cet effet selon une forme de réalisation les deux parties composant la prothèse 3 peuvent être réalisées dans un seul et même matériau par exemple une résine de synthèse telle qu'un métacrylate.

Tandis que la partie intérieure 8 est constituée de résine pure ou sensiblement pure, formant par conséquent un volume translucide et transparent, la partie dite extérieure 7 est constituée de la même résine mais comportant des charges minérales pigmentaires donnant à cette partie extérieure un aspect blanc laiteux et prévu en homochromie avec la partie de la dent support 1, de sorte que lorsque la prothèse est en position, elle se confond avec la surface extérieure de l'ensemble de la dent.

Et selon l'invention la partie translucide 8 est en communication avec l'extérieur par un canal traversant la partie opaque 7.

Le canal, de dimension très fine notamment de dimension capillaire, pourrait être constitué du même matériau que la partie 8 c'est-à-dire de résine translucide pure et non chargée.

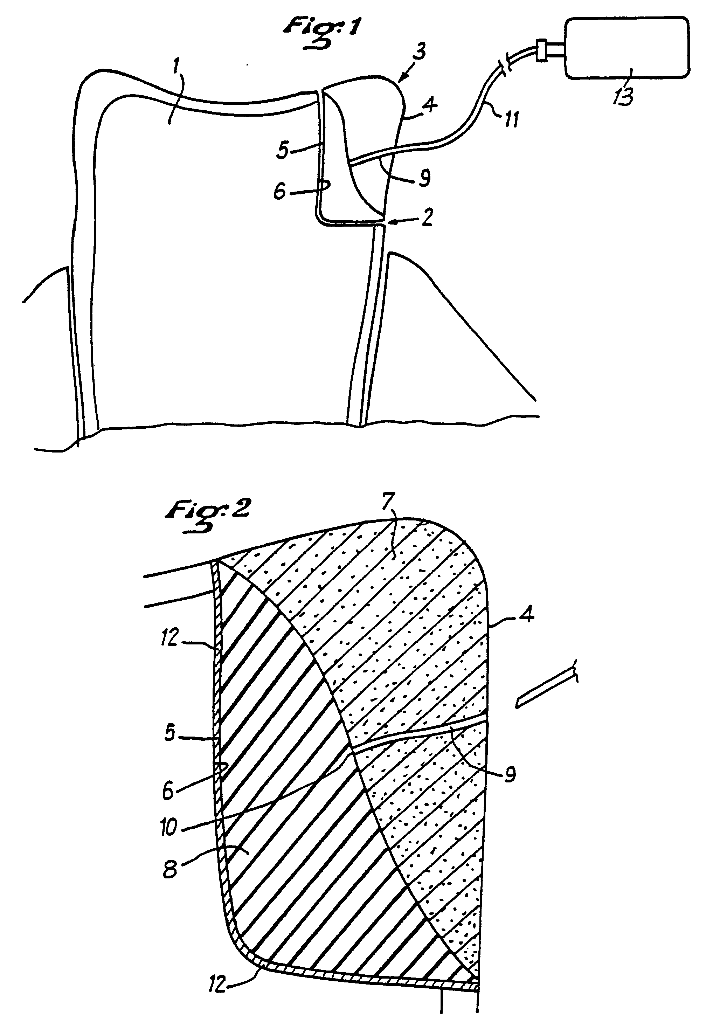

Selon la variante qui est représentée aux figures 1 et 2, le canal est occupé par une fibre optique 9 qui traverse la partie opaque 7 de la prothèse.

Cette fibre optique 9 débouche par une extrêmité 10 dans la partie translucide 8 de la prothèse; et notamment l'extrêmité terminale 10 peut être noyée à l'intérieur de cette partie translucide; la fibre 9 déborde du côté opposé au-delà de la paroi 4 de la partie opaque de la prothèse et se prolonge vers l'extérieur.

La mise en oeuvre de la prothèse selon l'invention illustrera l'intérêt et les avantages de cette dernière.

Après que la prothèse 3 ait été présentée dans son logement récepteur pour vérifier l'ajustement général des deux parois complémentaires, l'une ou de préférence les deux parois en regard respectivement 5 et 6 sont revêtues d'une couche d'un adhésif constitué selon l'invention d'une résine photopolymérisable.

On utilisera avantageusement les résines acryliques notamment les résines à base de métacrylate micro-chargées telles que les produits connus sous les marques commerciales Silux, Heliosit, Prismafill, Dentacolor, etc...

Ces résines à l'état non polymérisé se présentent sous une viscosité permettant une bonne mouillabilité des parois, facteur d'une adhérence ultérieure satisfaisante.

Le praticien peut alors repositionner la prothèse dans son logement récepteur et procéder aux ultimes ajustements ou vérifications nécessaires, la prothèse étant alors en situation puisqu'elle comporte déjà son interface d'adhésion constituée de la couche de résine photo-sensible 12.

En effet cette résine restera dans son état de viscosité initiale permettant par conséquent toutes les vérifications, ajustements et repositionnements utiles sans que la réaction de polymérisation se déclenche alors que dans le cadre de l'utilisation de résine à polymérisation initiée chimiquement, la résine d'adhésion est mise en place alors que le processus de polymérisation a déjà commencé et que s'opère par conséquent le durcissement limitant et finalement empêchant toutes possibilités de correction ou de travail du praticien.

Dans la mise en oeuvre de la présente invention, le praticien dispose donc de tout le temps nécessaire pour vérifier tous les paramètres permettant d'aboutir à une opération correcte.

Notamment le praticien dispose de tout le temps nécessaire pour retirer les bavures ou les excès de résine d'adhésion qui peuvent déborder au niveau de la jointure entre la prothèse et la partie saine de la dent support; et ceci tout en respectant et en vérifiant ensuite le positionnement correct de la prothèse.

Lorsque tous les ajustements ont été effectués dans de parfaites conditions de confort et de sécurité, et lorsque le positionnement final de la prothèse est correct par rapport au logement récepteur, les excès d'adhésifs ayant été nettoyés, le praticien peut alors déclencher la réaction de polymérisation qui va presque instantanément cristalliser le positionnement de la prothèse en assurant sa solidarisation par rapport à la dent support.

A cet effet, l'extrêmité 11 de la fibre 9 qui déborde à l'extérieur peut être amenée face à une source lumineuse par exemple un laser 13.

On aura choisi à cet effet la résine photopolymérisable et l'appareil émetteur du type laser 13 en concordance l'un par rapport à l'autre de sorte que la résine photopolymérisable mise en place dans l'interface 12 soit sensible à la radiation lumineuse émise par l'appareil 13.

Une insolation depuis l'appareil d'émission 13 se transmet par le guide d'ondes que constitue la fibre optique 11 jusqu'au niveau de la partie translucide de la prothèse 8 dans laquelle les rayons lumineux sont diffusés étant reçus par l'interface 12 occupée par la résine photopolymérisable.

De sorte que cette interface de résine 12 reçoit sur toute son étendue, depuis la paroi 5 de la partie translucide de la prothèse, les radiations lumineuses déclenchant ainsi la réaction de polymérisation de la résine.

Et ainsi le praticien peut de l'extérieur et au moment voulu assurer instantanément la fixation définitive de la prothèse dans la position qui a été préalablement vérifiée et définie.

Les résines photopolymérisables utilisées pour la solidarisation de la prothèse sont connues en elles-mêmes.

Et elles comportent une charge minérale notamment à base de dioxyde de silicium, de silicate d'alumine ou de silicate de lithium, permettant leur coloration correcte; de sorte que le joint constitué par l'interface 12 entre la dent support et la prothèse, qui débouche sur une faible épaisseur au niveau de la surface extérieure, est lui-même de coloration en harmonie avec le reste de la dent et la prothèse semble se confondre à l'oeil.

Cependant, alors que les résines dites «composites» et à polymérisation initiée par la lumière, n'ont été utilisées jusqu'à présent que pour des travaux très localisés, dans lesquels la résine composite elle-même venait reconstituer la paroi manquante de la dent, dans le cadre de la présente invention la résine composite à polymérisation par la lumière est utilisée en tant qu'adhésif dans l'interface d'une prothèse et le logement support, dans une partie non visible, la polymérisation étant initiée par un catalyseur extérieur.

Et ceci distingue nettement l'application des résines composites photosensibles dans le cadre de la présente invention par rapport à l'art antérieur; en effet, dans l'art antérieur, l'application de ces résines était limitée au cas où l'irradiation de la résine pouvait être obtenue directement depuis l'extérieur; alors que dans le cadre de la présente invention l'irradiation de la couche de résine photosensible servant d'adhésif, est obtenue alors que cette couche de résine photopolymérisable se trouve cachée et par conséquent normalement inaccessible à l'initiation catalytique par la lumière.

On comprend qu'il est aisé, l'opération de polymérisation et la solidarisation de la prothèse étant effectuée de sectionner la fibre 9 comme on le voit sur la figure 2, au ras de la paroi extérieure 4 de la prothèse.

Mais dans une autre variante, la prothèse peut être prévue avec une fibre ou un canal constituant guide d'ondes lumineuses 9 affleurant au niveau de la surface 4 et l'irradiation est alors obtenue en amenant l'appareil d'émissions lumineuses 13 face et au niveau du débouché de la fibre 9 par rapport à la paroi 4.

Et ceci pourra être également utilisé dans le cas où le canal traversant la partie opaque de la prothèse est occupée non pas par une fibre 9 mais par un filament de résine prolongeant la résine de la partie translucide 8.

L'invention s'applique également à la réalisation d'une prothèse telle que décrite ci-dessus; on peut à partir d'une empreinte en creux correspondant à l'empreinte du logement récepteur 2, couler une première couche de résine pure ou translucide correspondant à la couche 8; et la fibre 9 peut être alors mise en place, son extrêmité 10 débouchant dans la partie translucide 8 en étant noyée à la surface supérieure de cette région translucide 8; en suite de quoi la région opaque 7 est coulée notamment à partir d'une résine identique à celle constituant la région translucide 8, cette résine comportant alors des particules pigmentaires en vue d'assurer la coloration appropriée de la façade extérieure 4; dans cette opération la fibre 9 est noyée au sein de la région opaque 7 tandis qu'elle déborde par sa partie 11 pour permettre l'exposition de sa partie terminale devant la source de rayonnement laser 13.

Dans le cas de l'application de l'invention à la mise en place d'une prothèse notamment dentaire, l'irradiation lumineuse de l'interface photopolymérisable se faisant depuis le centre, le praticien peut aisément vérifier l'efficacité de l'opération de solidarisation.

En effet, il est possible de constater au niveau de la jointure entre la prothèse et le support dentaire, la réalisation de la polymérisation de l'interface de résine en vérifiant l'état de solidification de cette interface au niveau des bords relativement accessibles.

Et cette constatation suffit à permettre de déduire que la solidarisation est effective sur l'ensemble de l'interface; en effet puisque l'opération d'initiation photocatalytique a démarré depuis la zone centrale (qui est la plus proche et située dans le prolongement du débouché du guide d'ondes 10, la polymérisation partie depuis le centre se répand de proche en proche jusque vers la périphérie.

Et lorsque la polymérisation est constatée au niveau de la périphérie, on peut donc en déduire qu'elle est à plus forte raison effective et opérationnelle dans la zone centrale invisible et inaccessible.

De sorte que outre les commodités de mise en oeuvre opératoires obtenues dans le cadre de l'invention, on peut bien plus obtenir une sécurité dans la vérification du résultat.

Ainsi qu'on l'a précisé, bien que l'invention ait été plus spécialement décrite en rapport avec l'opération de mise en place d'une prothèse et notamment d'une prothèse dentaire, l'application du principe de l'invention peut être étendue à la solidarisation d'une pièce sur un support quelconque, ceci dans tous les domaines qu'il s'agisse d'opération de solidarisation artisanale ou de fabrication industrielle dans laquelle des éléments composants sont rapportés à un support par exemple dans le cadre de la réalisation d'un ensemble électronique à partir d'éléments composants; dans de nombreux cas où l'ajustement rigoureusement exact de la pièce ou du composant par rapport à son support doit être vérifié, il est alors souhaitable d'éviter la mise en oeuvre d'un collage par résine à polymérisation initiée par voie chimique qui présente les inconvénients exposés précédemment à savoir la nécessité de démarrer la réaction de polymérisation avant l'assemblage de sorte que le temps de vérification se trouve réduit.

Au contraire dans le cadre de la mise en oeuvre de l'invention, il est possible d'assurer la solidarisation d'une pièce ou d'un composant sur un support, en utilisant des résines photosensibles, même lorsque ces dernières sont destinées à assurer la solidarisation par une interface normalement non accessible à une irradiation lumineuse.

L'utilisation de résine photosensible permet ainsi qu'on l'a vu, d'assurer la mise en place de la résine de collage tout en permettant ensuite pendant un temps indéterminé et éventuellement prolongé les opérations d'ajustement et de règlage du positionnement; et lorsque ce règlage est alors vérifié, il est possible sans aucun contact physique avec la pièce, de déclencher l'opération de solidarisation de l'interface de collage en envoyant, par une fibre guide d'ondes débouchant à l'extérieur et traversant la face opaque de la pièce jusqu'à une région arrière translucide, une émission lumineuse irradiant, à travers la partie translucide de la pièce, l'interface de résine photopolymérisable qui se trouve ainsi rigidifiée en assurant la solidarisation des deux éléments, dans la position correcte qui a été vérifiée précédemment.

## Revendications

1. Pièce ou composant du type constitué d'un bloc rigide (3) destiné à être rapporté et solidarisé par scellement ou collage sur un support lui-même rigide (1) telle qu'une prothèse ou un inlay et destiné à occlure une cavité (2) dudit support rigide, caractérisé en ce que le bloc (3) comporte au moins deux régions dont une région opaque (7) définissant une façade (4) apparaissant à l'extérieur et une région translucide (8) orientée à l'intérieur vers la paroi (6) de ladite cavité et apte à constituer une zone de diffusion de radiations notamment lumineuses pour initier une réaction de polymérisation d'une résine photopolymérisable constituant l'interface de scellement (12) ou collage entre la paroi réceptrice (6) de ladite cavité et la paroi (5) en regard du bloc rapporté (3), et en ce que ladite région opaque est traversée par un passage débouchant d'un côté vers le milieu extérieur par la façade ce cette région opaque et débouchant de l'autre côté dans ladite région translucide (8), ce passage permettant le guidage des rayonnements notamment lumineux, depuis l'extérieur jusque dans ladite région translucide pour initier la réaction de photopolymérisation de ladite résine constituant l'interface de scellement ou de collage.

2. Pièce, notamment prothèse selon la revendication 1, caractérisée en ce que ledit passage constituant canal de guidage pour les ondes lumineuses catalysant la réaction de polymérisation est constitué de la même matière que la partie translucide (8) de la prothèse.

3. Pièce notamment prothèse selon la revendication 1, caractérisée en ce que ledit passage est occupé par une fibre optique (9) aboutissant par une extrêmité (10) à ladite région translucide (8) de la prothèse.

4. Pièce notamment prothèse selon la revendication 3, caractérisée en ce que la fibre optique (9) est prévue débordant à l'extérieur de ladite région opaque pour permettre l'exposition de son extrêmité libre à l'émission d'une source de rayonnement lumineuse telle qu'un émetteur laser (13).

5. Pièce notamment prothèse selon l'une des revendications 1 à 3, caractérisée en ce que dans la région translucide (8) est prévue un moyen de diffraction des radiactions lumineuses, tel qu'un prisme, ce dernier étant situé au débouché dudit passage notamment au débouché (10) de la fibre optique (9) dans la région translucide, ce moyen de diffraction assurant la répartition des radiations sur l'ensemble de l'interface entre la prothèse et la paroi de la cavité réceptrice.

6. Pièce notamment prothèse selon l'une des revendications 1 à 5, caractérisée en ce que les deux régions respectivement opaques (7) et translucides (8) de la prothèse sont réalisées en une résine de même nature, la région opaque étant constituée d'une résine identique à la résine de la région translucide et comportant des charges en densité et granulométrie appropriée et apte à donner à cette partie opaque une coloration convenable.

7. Pièce, notamment prothèse selon l'une des revendications 1 à 6, caractérisée en ce que le bloc de résine est constitué d'une résine unique définissant les deux régions respectivement opaque (7) et translucide (8), et lui-même formé d'une résine unique du type photopolymérisable et dont la réaction de polymérisation a été initiée par irradiation d'un rayonnement lumineux d'une longueur d'onde déterminée.

8. Procédé de réalisation d'une pièce prothèse selon l'une des revendications 1 à 7, caractérisée en ce que l'on coule dans une emprunte en creux de forme appropriée une première couche de résine translucide et constituant une région intérieure translucide (8) sur laquelle est coulée une seconde couche de résine chargée de particules pigmentaires pour constituer une région opaque (7) de ladite prothèse, et en ce que préalablement à la coulée de la seconde couche de résine chargée, on positionne l'extrémité d'une fibre optique (9) amenée au contact de la couche de résine translucide (8) et la résine chargée destinée à constituer la région opaque (7) de la prothèse est coulée autour de ladite fibre ainsi noyée dans la région opaque de la prothèse qu'elle traverse, l'extrémité libre de la fibre débordant à l'extérieur pour permettre son exposition aux radiations lumineuses.

9. Procédé de mise en oeuvre d'une pièce selon l'une des revendications 1 à 7, caractérisé en ce que la pièce comportant une région opaque et une région translucide est insérée dans une cavité réceptrice après interposition sur la paroi de la cavité et/ou sur la partie de la paroi de la pièce située en regard, d'une interface (12) de collage ou scellement constitué d'une résine photopolymérisable à l'état liquide, et après ajustement et vérifications du positionnement de la pièce (3), la résine photopolymérisable constituant l'adhésif d'interface (12) entre la paroi de la cavité réceptrice et de la pièce est exposée à l'irradiation d'un rayonnement de longueur d'onde spécifique de ladite résine et apte à initier la réaction de polymérisation, ledit rayonnement étant quidé à travers la région opaque de la pièce depuis une source extérieure au moyen de la fibre optique noyée dans ladite pièce, et en ce que la partie de la fibre (11) optique débordant à l'extérieur est ensuite sectionnée à fleur de la façade (4) apparente de la pièce (3).

10. Pièce, notamment prothèse selon l'une des revendications 3 à 7, caractérisé en ce que ladite fibre optique reliant une source de rayonnement du type laser (13) à argon apte à transmettre par la fibre optique (9, 11) associée à la prothèse et dont l'extrémité libre (14) est disposée préalablement face à la source de l'émission, une irradiation lumineuse catalysant la réaction de polymérisation de la résine de scellement.

**Patentansprüche**

1. Teil oder Komponente, bestehend aus einem starren Block (3), zum Aufbringen und festen Verbinden durch Ausgießen oder Kleben auf einem ebenfalls starren Träger (1) z.B. einer Prothese oder einem Inlay und zum Abschließen eines Hohlraums (2) im starren Träger, dadurch gekennzeichnet, daß der Block (3) wenigstens zwei Bereiche umfaßt, wobei ein undurchscheinender Bereich (7) eine nach außen gerichtete Fassade (4) definiert und wobei ein durchscheinender Bereich (8) nach innen zu der Wand (6) des Hohlraum gerichtet ist und zur Bildung einer Diffusionszone für insbesondere Lichtstrahlung zwecks Auslösen einer Polymerisationsreaktion eines photopolymerisierbaren Harzes geeignet ist, das die Grenzschicht (12) beim Ausgießen oder Kleben zwischen der Aufnahmewand (6) des Hohlraums und der Wand (5) des aufgebrachten Blocks (3) bildet, und daß der undurchscheinende Bereich von einem Durchgang durchdrungen ist, der einerseits in der Außenumwelt über der Fassade des undurchscheinenden Bereichs und andererseits in dem durchscheinenden Bereich (8) mündet, wobei dieser Durchgang die Durchleitung von insbesondere Lichtstrahlen von außen bis in den durchscheinenden Bereich zwecks Auslösen der Photopolymerisationsreaktion des die Grenzschicht beim Ausgießen oder Kleben bildenden Harzes erlaubt.

2. Teil, insbesondere Prothese nach Anspruch 1, dadurch gekennzeichnet, daß der einen Führungskanal für die die Polymerisationsreaktion katalysierenden Lichtwellen bildende Durchgang aus dem gleichen Material besteht wie der durchscheinende Teil (8) der Prothese.

3. Teil, insbesondere Prothese nach Anspruch 1, dadurch gekennzeichnet, daß der Durchgang von einem mit einem Ende (10) an dem durchscheinenden Bereich (8) der Prothese anliegenden Lichtleiter (9) eingenommen wird.

4. Teil, insbesondere Prothese nach Anspruch 3, dadurch gekennzeichnet, daß der Lichtleiter (9) außen am undurchscheinenden Bereich mündet und die Bestrahlung seines freien Endes mit einer Lichtquelle, wie z.B. einem Laser (13), erlaubt.

5. Teil, insbesondere Prothese nach einem der Ansprüche 1 bis 3, dadurch gekennzeichnet, daß im durchscheinenden Bereich (8) ein Mittel zum Beugen der Lichtstrahlen, wie z.B. ein Prisma, vorgesehen ist, wobei dieses an der Mündung (10) des Lichtleiters (9) im durchscheinenden Bereich angeordnet ist, wobei dieses Mittel zum Beugen des Lichts die Verteilung der Strahlung auf der Gesamtheit der Grenzschicht zwischen der Prothese und der Wand des Aufnahmehohlraumes sicherstellt.

6. Teil, insbesondere Prothese nach einem der Ansprüche 1 bis 5, dadurch gekennzeichnet, daß die beiden undurchscheinenden (7) bzw. durchscheinenden (8) Bereiche der Prothese aus einem Harz der gleichen Natur bestehen, wobei der undurchscheinende Bereich aus einem gleichen Harz wie dem des durchscheinenden Bereichs besteht und Zusätze in geeigneter Dicke und Korngröße enthält, wodurch dieser undurchscheinende Teil eine gewünschte Färbung erhält.

7. Teil, insbesondere Prothese nach einem der Ansprüche 1 bis 6, dadurch gekennzeichnet, daß der Block aus einem einzigen Harz besteht, das die beiden undurchscheinenden (7) und durchscheinenden (8) Bereiche definiert, und daß er aus einem einzigen Harz vom photopolymerisierbaren Typ besteht, wobei die Polymerisationsreaktion durch Bestrahlung mit einer Lichtstrahlung von festgelegter Wellenlänge ausgelöst wird.

8. Verfahren zum Erzeugen eines Prothesenteils nach einem der Ansprüche 1 bis 7, dadurch gekennzeichnet, daß in eine Vertiefung geeigneter Form eine erste Schicht durchscheinenden Harzes gegossen wird, wodurch ein innerer durchscheinender Bereich (8) gebildet wird, auf welche eine zweite Schicht von mit Pigmentpartikeln versetztem Harz gegossen wird, wodurch ein undurchscheinender Bereich (7) der Prothese gebildet wird, und daß vor dem Gießen der zweiten Schicht des versetzten Harzes das Ende eines Lichtleiters (9) in Kontakt mit der Schicht des durchscheinenden Harzes (8) positioniert wird, und daß das versetzte, zur Bildung des undurchscheinenden Bereichs (7) der Prothese vorgesehene Harz um den derart im von ihm durchlaufenen undurchscheinenden Bereich der Prothese eingebetteten Lichtleiter gegossen wird, wobei das freie Ende des Lichtleiters nach außen mündet, um somit seine Bestrahlung mit Lichtstrahlung zu erlauben.

9. Verfahren zum Durchführen eines Teils nach einem der Ansprüche 1 bis 7, dadurch gekennzeichnet, daß das einen undurchscheinenden und einen durchscheinenden Bereich umfassende Teil in einen Aufnahmehohlraum nach Aufbringen einer aus einem photopolymerisierbaren Harz im flüssigen Zustand bestehenden Grenzschicht (12) zum Kleben oder Ausgießen auf die Wand des Hohlraums und/oder auf den gegenüberliegenden Bereich der Wand des Teils eingefügt wird, und nach dem Einstellen und überprüfen der Stellung des Teils (3) das polymerisierbare, den Kleber der Grenzschicht (12) zwischen der Wand des Aufnahmehohlraums und dem Teil bildende Harz der Bestrahlung mit Strahlen einer Wellenlänge ausgesetzt wird, die dem Harz spezifisch und geeignet ist, die Reaktion der Polymerisation einzuleiten, wobei die Strahlen über den undurchscheinenden Bereich des Teils ausgehend von einer Außenquelle mittels der im Teil eingebetteten Lichtleitung geführt wird, und daß der Teil oder Abschnitt der nach außen mündenden Lichtleitfaser (11) anschließend bündig von der sichtbaren Vorderseite oder Fassade (4) des Teils (3) abgetrennt ist.

10. Teil, insbesondere Prothese nach einem der Ansprüche 3 bis 7, dadurch gekennzeichnet, daß der Lichtleiter eine Strahlungsquelle vom Typ eines zum Emittieren über den mit der Prothese verbundenen Lichtleiter (9, 11) geeigneten Argonlasers (13) verbindet, wobei dessen freies Ende (14) vorher gegenüber der Strahlungsquelle angeordnet wird und wobei eine Bestrahlung mit Licht die Polymersationsreaktion des Gießharzes katalysiert.

## Claims

1. Piece or component of the type constituted by a rigid block (1) adapted to be added and connected by seal or gluing on a support (1) which is itself rigid such as a prosthesis or an inlay and intended to stop a cavity (2) in said rigid support, characterized in that the block (3) comprises at least two regions, viz. an opaque region (7) defining a facade (4) appearing on the outside and a translucent region (8) oriented inwardly towards the wall (6) of the support and adapted to constitute a zone of diffusion of radiations, particularly of light, in order to initiate a reaction of polymerization of a photopolymerizable resin constituting the seal or gluing interface (12) between the receiving wall (6) of said cavity and the opposite wall (5) of the added block (3), and in that said opaque region is traversed by a passage opening on one side towards the outside medium via the facade of this opaque region and opening on the other side in said translucent region (8), this passage allowing the guiding of the radiations, particularly of light, from the outside up to in said translucent region in order to initiate the reaction of photopolymerization of said resin constituting the seal or gluing interface.

2. Piece, particularly prosthesis, according to Claim 1, characterized in that said passage constituting channel for guiding the light waves catalyzing the reaction of polymerization is constituted by the same material as the translucent part (8) of the prosthesis.

3. Piece, particularly prosthesis, according to Claim 1, characterized in that said passage is occupied by an optical fiber (9) terminating at one end (10) in said translucent region (8) of the prosthesis.

4. Piece, particularly prosthesis, according to Claim 3, characterized in that the optical fiber (9) is provided to project outside said opaque region in order to allow exposure of its free end to the emission of a source of light radiation such as a laser emitter (13).

5. Piece, particularly prosthesis, according to one of Claims 1 to 3, characterized in that, in the translucent region (8), there is provided a means for diffraction of the light radiations, such as a prism, this latter being located at the opening of said passage, particularly at the opening (10) of the optical fiber (9) in the translucent region, this means of diffraction ensuring the distribution of the radiations over the whole of the interface between the prosthesis and the wall of the receiving cavity.

6. Piece, particularly prosthesis, according to one of Claims 1 to 5, characterized in that the two regions, opaque (7) and translucent (8) respectively, of the prosthesis are made of a resin of the same nature, the opaque region being constituted by a resin identical to the resin of the translucent region and comprising fillers of appropriate density and granulometry and adapted to give this opaque part a suitable coloration.

7. Piece, particularly prosthesis, according to one of Claims 1 to 6, characterized in that the block of resin is constituted by a single resin defining the two regions, opaque (7) and translucent (8) respectively, and itself formed by a single resin of the photopolymerizable type and of which the reaction of polymerization was initiated by irradiation of a light radiation of a determined wave length.

8. Process for producing a prosthesis piece according to one of Claims 1 to 7, characterized in that there is cast into a hollow impression of appropriate form a first layer of translucent resin constituting an inner translucent region (8) on which is cast a second layer of resin laden with pigmentary particles to constitute an opaque region (7) of said prosthesis, and in that, prior to casting the second layer of laden resin, the end of an optical fiber (9) is positioned in contact with the layer of translucent resin (8) and the laden resin intended to constitute the opaque region (7) of the prosthesis is cast around said fiber thus embedded in the opaque region of the prosthesis that it traverses, the free end of the fiber projecting to the outside in order to allow exposure thereof to the light radiations.

9. Process for making a piece according to one of Claims 1 to 7, characterized in that the piece comprising an opaque region and a translucent region is inserted in a receiving cavity after interposition on the wall of the cavity and/or on that part of the wall of the piece located opposite, of a gluing or seal interface (12) constituted by a photopolymerizable resin in the liquid state, and after adjustment and verifications of the positioning of the piece (3), the photopolymerizable resin constituting the interface adhesive (12) between the wall of the receiving cavity and of the piece is exposed to the irradiation of a radiation of wave length specific of said resin and adapted to initiate the reaction of polymerization, said radiation being guided through the opaque region from an outside source by means of the optical fiber embedded in said piece, and in that part of the optical fiber (11) projecting to the outside is then cut flush with the visible facade (4) of the piece (3).

10. Piece, particularly prosthesis according to one of Claims 3 to 7, characterized in that said optical fiber is connected to a source of radiation of the argon laser type (13) adapted to transmit by the optical fiber (9, 11) associated with the prosthesis and whose free end (14) is previously disposed facing the source of the emission, a light irradiation catalyzing the reaction of polymerization of the seal resin.

*Fig.1*

*Fig.2*